# EUROPEAN PATENT SPECIFICATION

(11) **EP 2 873 479 B1**
(45) Date of publication and mention of the grant of the patent: **18.03.2020**
(21) Application number: 13816679.8
(22) Date of filing: 15.07.2013
(51) Int. Cl.: B27B 9/02

(54) **PORTABLE CUTTING TOOL**
TRAGBARES SCHNEIDWERKZEUG
OUTIL DE COUPE PORTATIF

(30) Priority: 13.07.2012 CN 201210243075
(43) Date of publication of application: 20.05.2015
(73) Proprietor: Positec Power Tools (Suzhou) Co., Ltd, Suzhou, Jiangsu 215123 (CN)
(72) Inventor: BROWN, Warren, Mount Evelyn Victoria 3796 (AU); SZOMMER, Harry, Frankston North Victoria 3200 (AU); GERHARDT, Graham, Warrandyte Victoria 3133 (AU)
(74) Representative: Hill, Justin John
(86) International application number: PCT/CN2013/079358
(87) International publication number: WO 2014/008873

(56) References cited:
- CN-A- 102 407 381
- CN-Y- 201 046 516
- JP-B2- 3 505 696
- US-A- 2 657 719
- US-A- 6 026 576

## Description

### BACKGROUND

### Technical Field

The present invention relates to a power tool, in particular in a portable cutting tool.

### Related Art

A conventional portable cutting tool, such as a portable electric circular saw, usually includes a blade used for cutting workpieces; a motor for driving the blade, where an output shaft of the motor is usually perpendicular to the blade; and a main handle, used to be gripped by an operator during operation, where the main handle is disposed perpendicular to the motor. Such electric circular saw includes a base, an upper guard, and a lower guard. The upper guard is located on an upper part of the base for receiving the blade at any time, and the lower guard is located below the base. During working, the lower guard is rotatable to expose a lower part of the blade. CN201046516Y represents the prior art closest to the present invention. This document discloses a portable cutting tool comprising a blade, a motor for driving the blade to rotate, wherein the motor comprises an output shaft; a cutting unit comprising a guard assembly; wherein the guard assembly comprises an upper guard or receiving the blade and a lower guard, wherein the lower guard is rotatable relative to the upper guard to expose the blade to cut a workpiece; a base connected to the upper guard, wherein the base is provided with a blade through-hole for the blade to pass through, and further comprises a base bottom portion for abutting against the workpiece and a front side wall extending upwards from the base bottom portion; a housing, comprising a front portion connected to the upper guard, a rear portion extending longitudinally, and a gripping portion disposed between the front portion and the rear portion, wherein the blade is rotatably disposed on the front portion by a blade shaft, the motor is disposed in the rear portion, and the blade shaft is perpendicular to the output shaft; the housing and the cutting unit are movable around a first axis relative to the base to change the cutting depth; and a depth adjusting holder, wherein the depth adjusting holder is provided with a first guide slot which is an arc-shaped guide slot, and the center of a circle corresponding to the arc where the first guide slot is located is on the first axis. Disadvantages of such conventional electric circular saw are that it is large and cumbersome, and an operator cannot use it conveniently.

### SUMMARY

One technical problem to be solved by the present invention is to provide a portable cutting tool that is comfortable to operate.

The present invention provides a portable cutting tool comprising the combination of features of claim 1.

Preferably, the upper guard is rotatably connected to the supporting member around the first axis which is parallel with the blade shaft to adjust a cutting depth, and the upper guard is movable between the minimum cutting position at which the blade is not exposed out of the blade through-hole and a maximum cutting position at which the blade is exposed out of the blade through-hole by a maximum dept.

Preferably, in the maximum cutting position, an angle of the longitudinal extending axis of the gripping portion and base bottom portion is not greater than 20 degrees.

Preferably, the supporting member is pivotally connected to the base around a second axis which is parallel with the base bottom portion to adjust a cutting angle, wherein the supporting member is provided with a second guide slot which is an arc-shaped guide slot, and the center of a circle corresponding to the arc where the second guide slot is located is on the second axis.

Preferably, the lower guard is rotatably disposed on the blade shaft by a bearing.

Preferably, a friction pad that abuts against a surface of the workpiece is disposed on the base front side wall, and is used for insertion-type cutting.

In a preferred embodiment of the portable cutting tool according to the present invention, a friction pad that abuts against a surface of workpiece is disposed on the base front side wall, and in this manner, the friction pad abuts against the workpiece and rotates around a contacting line between the friction pad and the workpiece, thereby implementing insertion-type cutting, so that the portable cutting tool has multiple cutting modes.

Preferably, the friction pad includes a curved surface for contacting with the workpieces.

### BRIEF DESCRIPTION OF THE DRAWINGS

The present invention is further described in detail below with reference to the accompanying drawings.
FIG. 1 is a three-dimensional view of a portable cutting tool in a first embodiment of the present invention.
FIG. 2 is a partial three-dimensional exploded view of the portable cutting tool disclosed in FIG. 1.
FIG. 3 is a sectional view along an A-A direction in FIG. 1.
FIG. 4 is a partial three-dimensional exploded view of the portable cutting tool disclosed in FIG. 1.
FIG. 5 is a front view of the portable cutting tool disclosed in FIG. 1, where the portable cutting tool is at a minimum cutting position.
FIG. 6 is a front view of the portable cutting tool disclosed in FIG. 1, where the portable cutting tool is at a maximum cutting position.
FIG. 7 is a three-dimensional view of the portable cutting tool disclosed in FIG. 1 viewed from another side, where a blade and a base bottom portion are disposed perpendicular to each other.
FIG. 8 is a three-dimensional view of the portable cutting tool disclosed in FIG. 1 viewed from another side, where a blade and a base bottom portion are disposed in a manner of being inclined relative to each other.
FIG. 9 is a schematic view of the portable cutting tool disclosed in FIG. 1 during insertion-type cutting.
FIG. 10 is a schematic view of the portable cutting tool disclosed in FIG. 1 during insertion-type cutting.
FIG. 11 is a schematic view of the portable cutting tool disclosed in FIG. 1 during insertion-type cutting.
FIG.12 is a schematic view of the portable cutting tool disclosed in FIG. 1 during translational cutting.
FIG. 13 is a partial three-dimensional exploded view of a portable cutting tool in a second embodiment of the present invention, and
FIG. 14 is a partial three-dimensional exploded view of a portable cutting tool in an example not according to the present invention.

### DETAILED DESCRIPTION

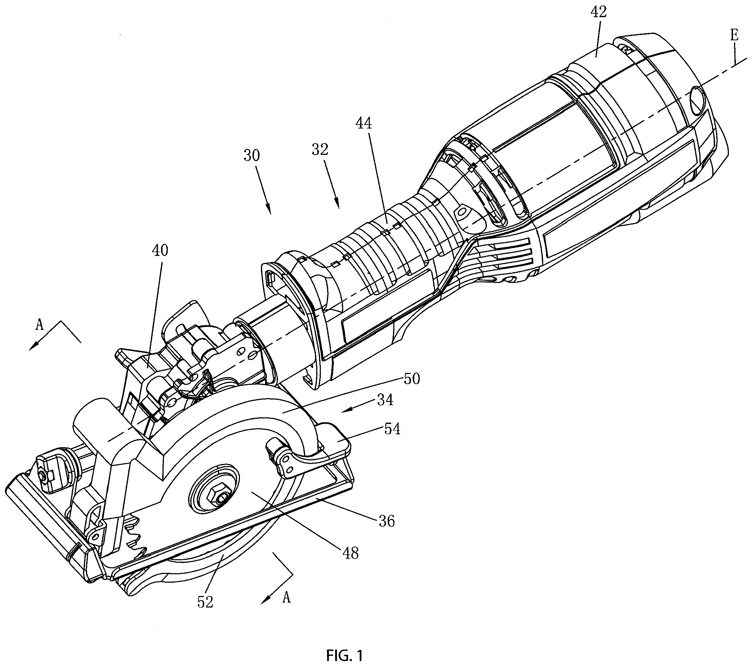

Referring to FIG. 1, an embodiment of the present invention provides a portable cutting tool 30. The portable cutting tool 30 includes a housing 32, a motor (not shown in the figure) received in the housing 32, a transmission assembly (not shown in the figure) located in the housing 32 and used for transmit power, a cutting unit 34 connected to the housing 32, a base 36 connected to the cutting unit 34, and a switch assembly (not shown in the figure) located on the housing 32 and used for controlling on/off of the motor. In the description of the present invention, unless otherwise specified, the direction related terminologies such as front, rear, left, right, upper and lower are all directions relative to normal use of the portable cutting tool, for example, it is defined that a forward direction of the portable cutting tool is front, and a direction opposite to the forward direction of the portable cutting tool is rear.

A power supply of the portable cutting tool 30 is an alternating current power supply, that is, the motor is powered by an alternating current power supply. Certainly, the portable cutting tool 30 may also be powered by a direct current power supply, that is, a battery pack is installed on the portable cutting tool 30, and the battery pack supplies power to the motor.

The motor may be a carbon brush motor, a brushless motor, or the like. Alternatively, corresponding to the power source of the portable cutting tool 30, the motor may be an alternating current motor or a direct current motor. The motor has a motor output shaft (not shown in the figure), and rotations of the motor are output by mounting a gear on the motor output shaft.

The housing 32 includes a front portion 40 and a rear portion 42 that extends in a longitudinal direction, where the transmission assembly is disposed in the front portion 40. In this embodiment, the front portion 40 is a gearbox case, and is connected to the cutting unit 34; the rear portion 42 is used for receiving the motor, and the rear portion 42 is provided with an air inlet (not shown) and an air outlet (not shown). The longitudinal extending axis of the rear portion 42 is E. The motor output shaft is disposed parallel to the longitudinal extending axis E of the rear portion 42.

The cutting unit 34 is disposed on one side of the front portion 40. Because the motor is disposed in the rear portion 42 and is away from the base 36, the front portion 40 has a large usable space on the other side that is away from the cutting unit 34, so that other structures can be disposed therein.

A position where the front portion 40 and the rear portion 42 are connected forms a connection portion 44. To utilize the structure of the connection portion 44 more properly, the connection portion 44 is designed as a gripping portion 44 of the portable cutting tool 30, that is, a user operates the portable cutting tool 30 by gripping the gripping portion 44, so as to perform cutting. When the user grips the gripping portion 44, a fulcrum is formed between the front portion 40 and the rear portion 42; parts on two sides of the fulcrum restrict each other under the effect of respective weights, which implements that after the user grips the gripping portion 44, the portable cutting tool 30 is in a relatively stable state, and a cutting operation can be performed easily, thereby making the operation more comfortable. Preferably, the center of gravity of the portable cutting tool 30 is on the gripping portion 44, and in this case, the portable cutting tool 30 is most comfortable to operate.

Certainly, the gripping portion is not limited to being formed at the connection portion, for example, the gripping portion may also be additionally disposed above the housing 32, where the gripping portion is connected to the front portion 40 and the rear portion 42; persons skilled in the art may further make other alterations, which shall fall within the protection scope of the claims.

The longitudinal extending axis of the gripping portion 44 may be disposed substantially parallel to or coincide with the longitudinal extending axis E of the rear portion 42. In this embodiment, the longitudinal extending axis of the gripping portion 44 coincides with the longitudinal extending axis E of the rear portion 42.

Referring to FIG. 1 and FIG, 2, the cutting unit 34 includes a blade 48 that is mounted on a blade shaft 46 and driven by the motor to rotate, and a guard assembly. A locking member 49 passes through an upper pressing plate 51 and a lower pressing plate 53, to fix the blade 48 on the blade shaft 46. A fitting structure is disposed between the upper pressing plate 51 and the lower pressing plate 53, so that the blade shaft 46 can transmit power to the blade 48 more efficiently.

The guard assembly includes an upper guard 50 fixedly connected to the front portion 40 and a lower guard 52 that rotates around the axis F of the blade shaft 46. The upper guard 50 is used for covering an upper part of the blade 48, and the lower guard 52 is used for covering a lower part of the blade 48. Certainly, according to different safety requirements, the upper guard 50 and the lower guard 52 may completely cover the whole blade 48 or partially cover the blade 48. During working, the lower guard 52 is driven by a workpiece to rotate around the axis F of the blade shaft 46, so that the lower part of the blade 48 is exposed to cut the workpiece. A grip 54 is disposed on the lower guard 52, and by operating the grip 54, the lower guard 52 rotates around the axis F of the blade shaft 46, so as to expose the lower part of the blade 48.

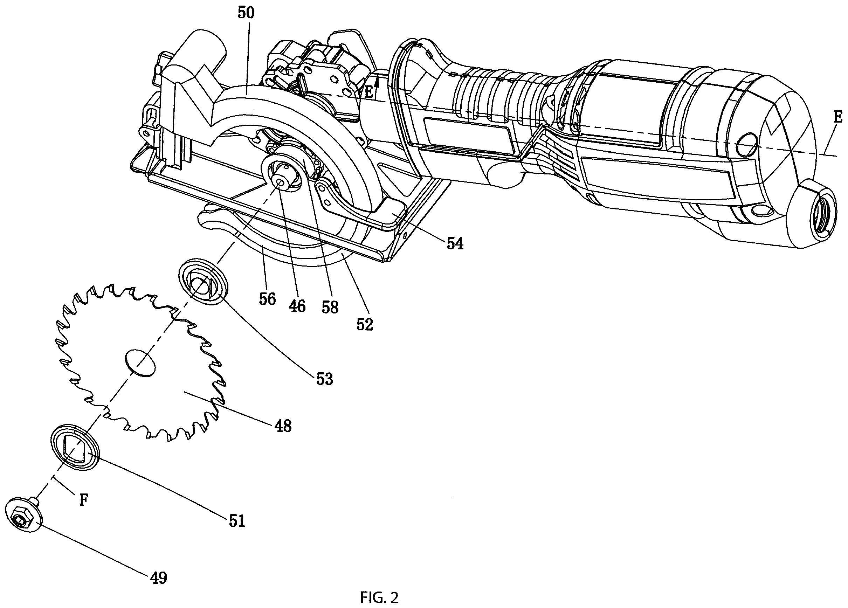

Referring to FIG. 2, the lower guard 52 includes a receiving portion 56 used for receiving the blade 48 and a hub 58 connected to the receiving portion 56. The hub 58 is rotatably disposed on the blade shaft 46 directly, so as to reduce the diameter of the hub 58, thereby increasing a usable part of the blade 48, and further enhancing an overall cutting capacity of the portable cutting tool.

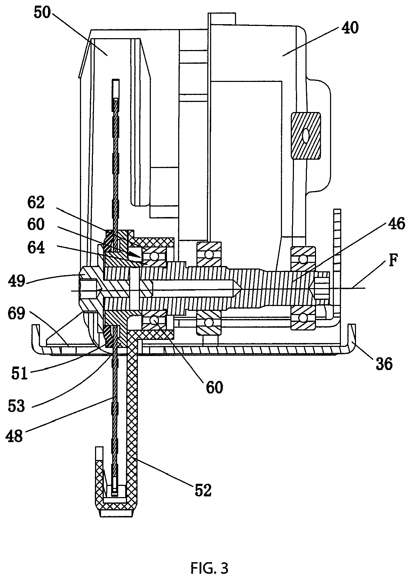

Referring to FIG. 3, a bearing 60 is disposed between the blade shaft 46 and the hub 58. The bearing 60 includes a bearing inner race 62 and a bearing outer ring 64. The bearing outer ring 64 is rotatable relative to the bearing inner race 62. The bearing inner race 62 and the blade shaft 46 are in an interference fit. The bearing outer ring 64 and the hub 58 are in an interference fit. The axis of the blade shaft 46 is F. In this manner, the lower guard 52 can rotate around the axis F of the blade shaft 46 smoothly, but does not rotate with the blade shaft 46.

Certainly, the mounting manner of directly disposing the lower guard 52 on the blade shaft 46 or disposing the lower guard 52 on the blade shaft 46 by using the bearing 60 is not limited to being applied to the portable cutting tool listed in this embodiment; this mounting manner is also applicable to cutting tools having a lower guard, such as a common circular electric saw or table-type miter saw, and can achieve an effect of enhancing the cutting capacity.

The transmission assembly is adaptively connected to the motor output shaft, so as to transmit, to the blade 48 through the blade shaft 46, power output by the motor output shaft. In this embodiment, the transmission assembly includes a gear transmission mechanism (not shown in the figure), and the gear transmission mechanism may use worm-gear transmission or bevel gear transmission. In this embodiment, the gear transmission mechanism uses two-stage bevel gear transmission. The axis F of the blade shaft 46 is disposed perpendicular to the axis of the motor output shaft.

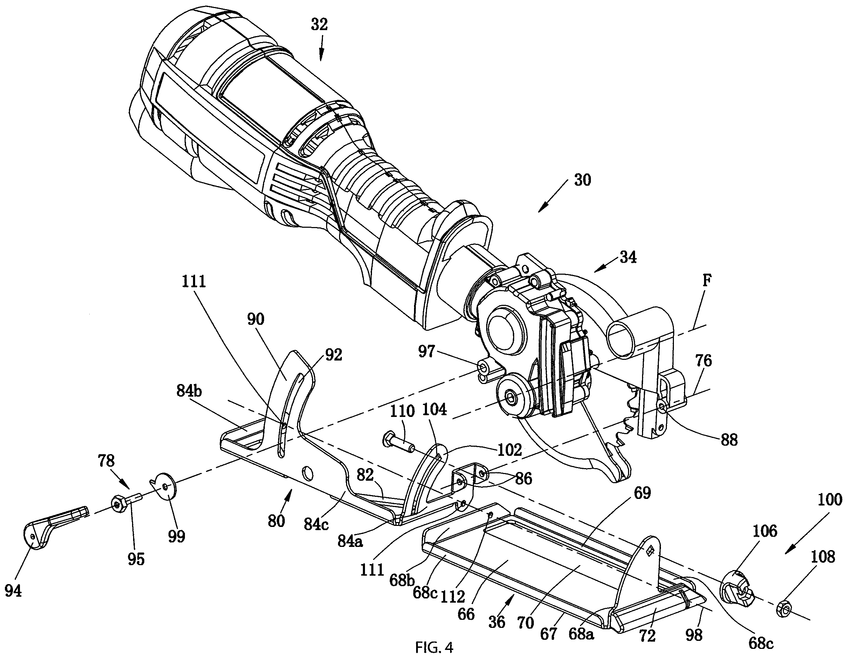

Referring to FIG. 4, the base 36 includes a base bottom portion 66, and during working, the base bottom portion 66 abuts against a surface of a workpiece. The base bottom portion 66 has a bottom surface 67 in contact with the surface of the workpiece and a top surface 69 that is disposed away from the surface of the workpiece. Base front, rear, left and right side walls 68a-d substantially form a circumference and extend upward from the base bottom portion 66. The base bottom portion 66 is provided with a blade through-hole 70 that is used for the blade 48 to pass through. A friction pad 72 is disposed on an external side of the base front side wall 68a. Specific functions of the friction pad 72 will be described in detail in the following.

A depth adjusting mechanism is disposed in the portable cutting tool 30 to adjust a cutting depth. The depth adjusting mechanism can make the housing 32 and the cutting unit 34 pivot around a first axis 76 together and locked by a locking device 78 mounted on the housing 32. The first axis 76 is disposed parallel to the axis F of the blade shaft 46.

The portable cutting tool 30 includes a supporting member 80 connected to the base 36. The supporting member 80 includes a supporting bottom portion 82. Supporting member front, rear, and right side walls 84a-c extend upward from the supporting bottom portion 82, and no side wall is provided on the left side of the supporting bottom portion 82, so that the blade 48 can pass through the supporting member 80 conveniently.

The supporting member front side wall 84a is provided with symmetric mounting holes 86, and the front portion 40 is provided with a through-hole 88. A pin (not shown in the figure) passes through the mounting holes 86 and the through-hole 88, so that the housing 32 and the cutting unit 34 together rotate around the first axis 76 defined by the pin. Certainly, the supporting member 80 and the front portion 40 may also be mounted by using a bolt, a screw, a rivet, or other structures commonly known by persons skilled in the art.

The supporting member 80 includes a depth adjusting holder 90, where the depth adjusting holder 90 extends upward from one side of the supporting member right side wall 84c. The depth adjusting holder 90 is provided with a first guide slot 92. The first guide slot 92 is an arc-shaped guide slot, and the center of a circle corresponding to the arc where the first guide slot 92 is located is on the first axis 76.

The locking device 78 includes a handle 94, a bolt 95 connected on the handle 94, and a threaded hole 97 provided in the front portion 40. The bolt 95 passes through the first guide slot 94 and fits with the threaded hole 97. By rotating the handle 94, the bolt 95 is locked in the threaded hole 97, thereby locking the housing 32 and the cutting unit 34 relative to the supporting member.

The upper guard 50 and the first guide slot 92 are respectively disposed on two sides of the front portion 40. In this manner, an operator can use the handle 94 conveniently, and moreover, the length of the bolt can be reduced, thereby enhancing the operability.

To facilitate observation of the cutting depth, the depth adjusting holder 90 is provided with a scale (not shown in the figure), which indicates the cutting depth, at a position close to the first guide slot 92, and an indicator 99 is disposed on the bolt 95. Once the bolt 95 is loosened, an operator moves a cutting element 36 so that the bolt 95 slides in the first guide slot 92. The housing 32 and the cutting unit 34 together move around the first axis 76 relative to the base 36 and the supporting member 80 to change the cutting depth of the blade 48. At this time, a cutting angle can be observed by using the indicator 99 and the scale that is provided on the depth adjusting holder 90. Once the cutting unit 34 reaches a desired position, the handle 94 may be rotated so as to tightly fasten the cutting unit 34 at the desired position.

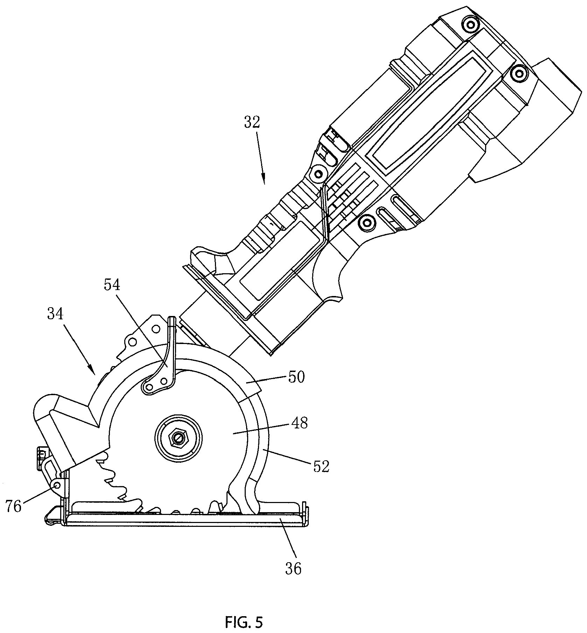

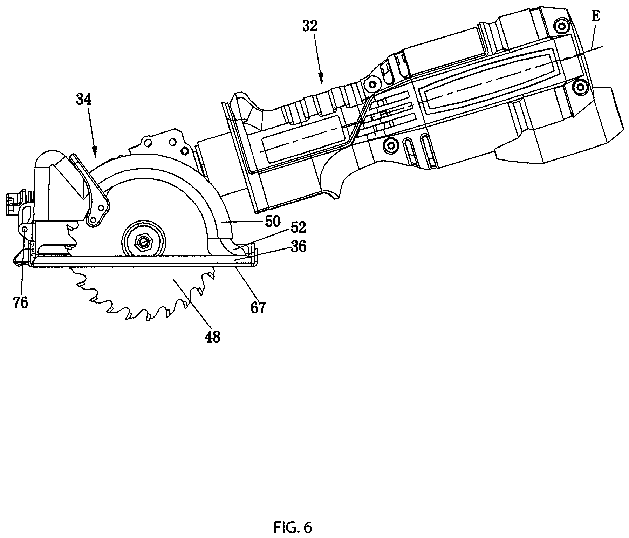

As shown in FIG. 5 and FIG. 6, the cutting unit 34 moves around the first axis 76 and between a minimum cutting position and a maximum cutting position. As shown in FIG. 5, at the minimum cutting position, the blade 48 does not pass through the blade through-hole 70 in the base 36, and the distance between the blade shaft 46 and the base 36 is of a maximum value. As shown in FIG. 6, at the maximum cutting position, the blade 48 passes through the blade through-hole 70 in the base 36, and the distance between the blade shaft 46 and the base 36 is of a minimum value. At this position, an angle between the longitudinal extending axis E of the gripping portion 44 and the base 36 is not greater than 20 degrees, which makes an operator much more comfortable.

Referring to FIG. 3 and FIG. 6, at the maximum cutting position, a lower edge of the lower pressing plate 53 is flush with the top surface 69 of the base bottom portion 66. In this manner, the usable part of the blade 48 is increased, thereby enhancing the overall cutting capacity of the portable cutting tool. Certainly, the effect of enhancing the cutting capacity can also be achieved when a small distance exists between the lower edge of the lower pressing plate 53 and the top surface 69 of the base bottom portion 66. However, the distance between the lower edge of the lower pressing plate 53 and the top surface 69 of the base bottom portion 66 should not exceed 10 mm, and may be 6 mm, 4 mm, or the like.

Referring to FIG. 4 again, an angle adjusting structure is disposed in the portable cutting tool 30, to change a cutting angle. The angle adjusting structure can make the housing 32 and the cutting unit 34 pivot around a second axis 98 together and fixed by a locking device 100 mounted on the base 36. The second axis 98 is disposed parallel to the base bottom portion 66.

With a greater distance between the second axis 98 and the depth adjusting holder 90, when the handle 94 is unloosed to perform depth adjustment or angle adjustment, seizing is avoided, and the cutting unit 34 does not shake and is relatively stable. Therefore, in this embodiment, the depth adjusting holder 90 and the second axis 98 are respectively disposed on two sides of the front portion 40, which increases the distance between the depth adjusting holder 90 and the second axis 98. Certainly, the effect of stabilization can also be achieved when the distance between the depth adjusting holder 90 and the second axis 98 is greater than half of the width of the base 36 (it is defined that the width of the base 36 is along the first axis 76).

The supporting member 80 includes an angle adjusting holder 102, where the angle adjusting holder 102 extends upward from the side of the supporting member front side wall 84a. The angle adjusting holder 102 is provided with a second guide slot 104. The second guide slot 104 is an arc-shaped guide slot, and the center of a circle corresponding to the arc where the second guide slot 104 is located is on the second axis 98.

The locking device 100 includes a knob 106, a nut 108 connected to the knob 106, and a bolt 110 that fits with the nut 108. The bolt 110 passes through the through-hole in the base front side wall 68a and the second guide slot 104, to engage with the nut 110. The knob 106 is screwed tightly to lock the housing 32 and the cutting unit 34 relative to the base 36.

The supporting member front side wall 84a and rear side wall 84b are provided with symmetric connecting holes 111; the base front side wall 68a and rear side wall 68b are separately provided with a through-hole 112 (only the through-hole in the base rear side wall 68b is shown in the figure). Two pins (not shown in the figure) each pass through the connecting hole 111 and the through-hole 112 that are close to each other, to make the supporting member 80, the housing 32, and the cutting unit 34 together pivot around the second axis 98 defined by the pin. Certainly, the supporting member 80 and the base 36 may also be mounted by using a bolt, a screw, a rivet or other structures commonly known by persons skilled in the art.

To facilitate observation of the cutting angle, the angle adjusting holder 102 is provided with a scale (not shown in the figure), which indicates the cutting angle, at a position close to the second guide slot 104, and a pointer is disposed on the base front side wall 68a. Once the knob 106 is loosened, the bolt 110 slides in the second guide slot 104 so that the housing 32, the cutting unit 34 and the supporting member 80 can move around the second axis 98 relative to the base 36 to change the cutting angle of the blade 48. At this time, the cutting angle of the portable cutting tool 30 can be observed by using the pointer disposed on the base front side wall 68a. Once the cutting unit 34 reaches a desired position, the knob 106 may be screwed tightly so as to tightly fasten the cutting unit 34 at the desired position.

It can be learned from the above description that, the supporting member 80 includes the depth adjusting holder 90 and the angle adjusting holder 102; in other words, both the first guide slot 92 used for depth adjustment and the second guide slot 104 used for angle adjustment are provided on the supporting member 80. In this manner, cutting costs can be reduced; moreover, the rigidity of the supporting member 80 can be enhanced, and the cutting precision of the portable cutting tool 30 can be improved.

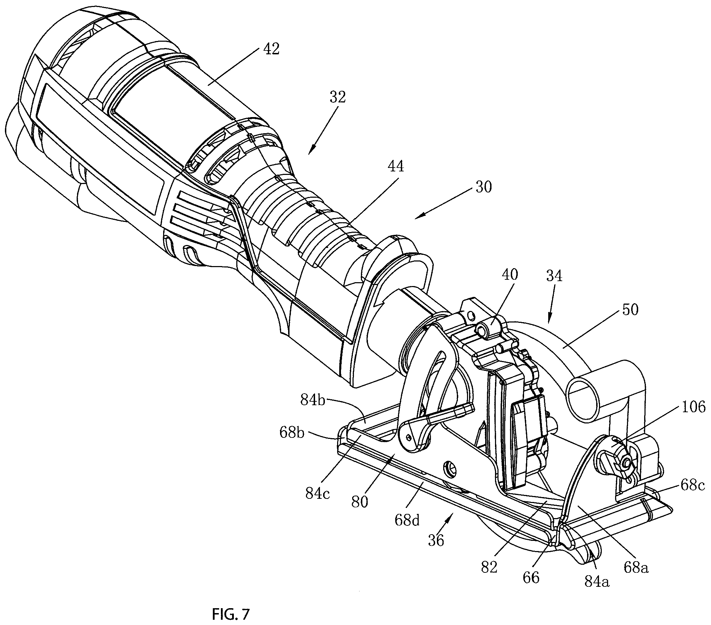

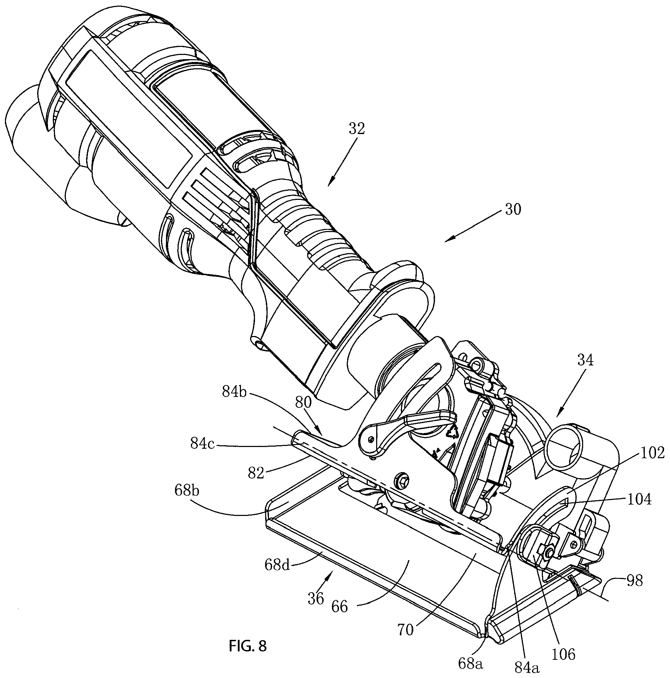

As shown in FIG. 7, when the blade 48 is perpendicular to the base bottom portion 66, the base front, rear, left, and right side walls 68a-d substantially form a circumference to enclose the supporting member front, rear, and right side walls 84a-c, and the supporting member front, rear, and right side walls 84a-c are separately adhered to inner sides of the base front side wall 68a, the base rear side wall 68b, and the base right side wall 68d. At this time, the supporting bottom portion 82 is adhered to the base bottom portion 66. As shown in FIG. 8, when the knob 106 is loosened, the bolt 110 slides in the second guide slot 104, and the supporting member 80 rotates around the second axis 98; at this time, the supporting member front, rear, and right side walls 84a-c are separated from the inner sides of the base front side wall 68a, the base rear side wall 68b, and the base right side wall 68d. An angle formed between the supporting bottom portion 82 and the base bottom portion 66 is equal to an angle formed between the blade 48 and the base bottom portion 66, namely, an inclined cutting angle of the blade 48.

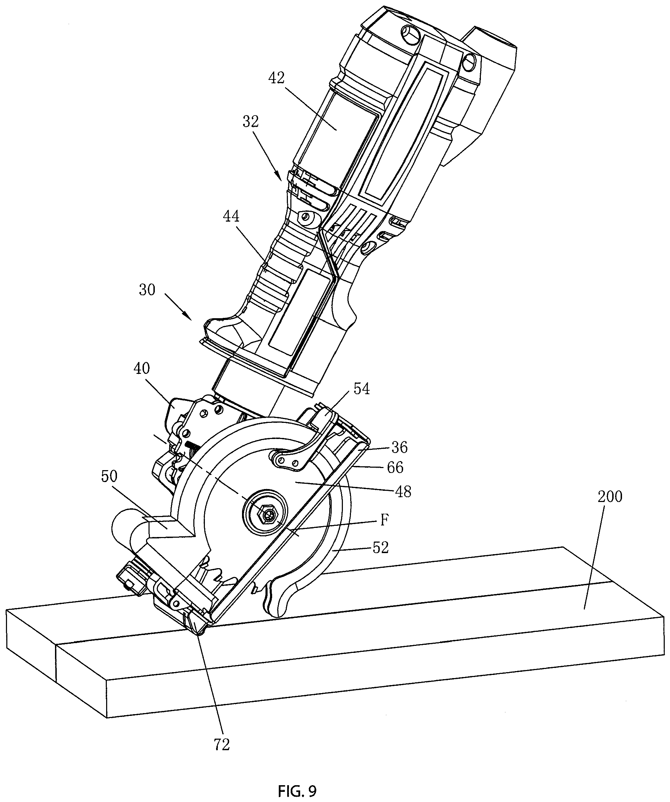

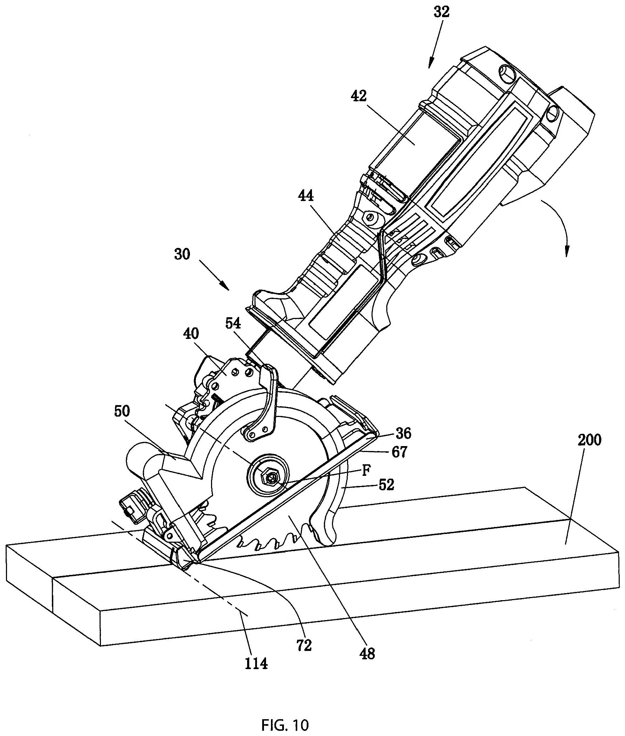

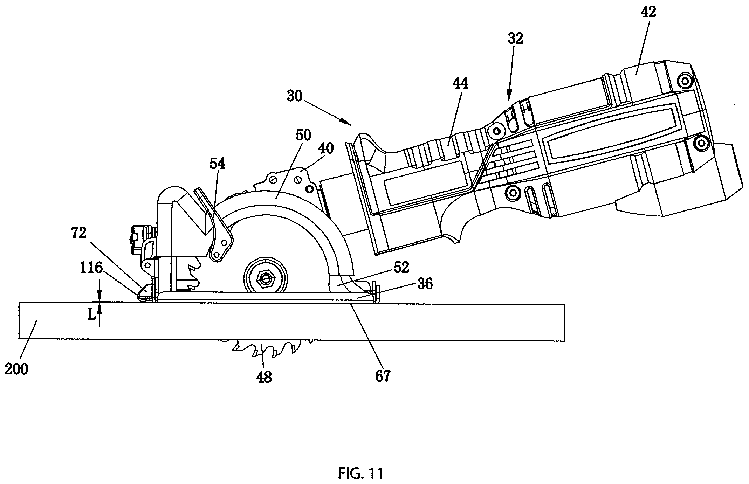

The portable cutting tool 30 has a translational cutting mode and an insertion-type cutting mode. During insertion-type cutting, the motor is started. As shown in FIG. 9, the friction pad 72 abuts against a surface of workpiece 200, and an operator grips the gripping portion 44 with one hand and operates the grip 54 with the other hand, so that the lower guard 52 rotates around the axis F of the blade shaft 46 relative to the upper guard 50; next, as shown in FIG. 10, the operator grips the gripping portion 44 and applies a pressure to the gripping portion 44, and at this time, the portable cutting tool 30 is rotated with the contacting line 114 between the friction pad 72 and the workpiece 200 as a rotation axis, so that the whole portable cutting tool 30 rotates clockwise; during rotation, the lower guard 52 may be further pushed by the grip 54 or the workpiece 200, to rotate around the axis F of the blade shaft 46, so that the blade 48 exposed from the lower guard 52 can process the workpiece. In this manner, the operator can cut a slot at the middle of the workpiece 200. Further referring to FIG. 11, the portable cutting tool 30 rotates clockwise until the bottom surface 67 of the base bottom portion 66 is completely adhered to the surface of the workpiece 200; at this time, the portable cutting tool 30 can be pushed forward to cut the workpiece, so that the portable cutting tool 30 processes an elongated slot of a given length.

Further referring to FIG. 11, the friction pad 72 is usually made of a wear-resisting and anti-slipping material, such as rubber or silicone. Therefore, the friction pad 72 can prevent the base 36 from slipping on the surface of the workpiece 200, so that the cutting is not affected; it is also avoided that the friction pad 72 damages the surface of the workpiece 200 during rotation of the portable cutting tool 30.

The friction pad 72 includes a curved surface 116 in contact with the surface of the workpiece 200. The curved surface 116 may be an arc surface or at least a part of the curved surface 116 is an arc surface. The curved surface 116 facilitates the rotation of the portable cutting tool 30 and makes the rotation stable, and can better protect the surface of the workpiece 200 during rotation of the portable cutting tool 30.

A gap is reserved between the friction pad 72 and the bottom surface 67 of the base bottom portion 66, and certainly, a smaller gap makes the rotation of the portable cutting tool 30 easier. That a gap is reserved between the friction pad 72 and the bottom surface 67 means that: when the bottom surface 67 is adhered to the surface of the workpiece 200, a given gap L exists between the lowermost end of the friction pad 72 and the surface of the workpiece 200, and in this manner, when the portable cutting tool 30 is pushed to move along the surface of the workpiece 200, the friction pad 72 is not in contact with the surface of the workpiece 200 and therefore does not affect the pushing on the portable cutting tool 30.

Certainly, the manner of disposing the friction pad 72 on the base 36 so that an operator can perform insertion-type cutting conveniently is not limited to being applied to the portable cutting tool listed in this embodiment; this manner is also applicable to the conventional circular electric saw, and can also achieve the effect of insertion-type cutting.

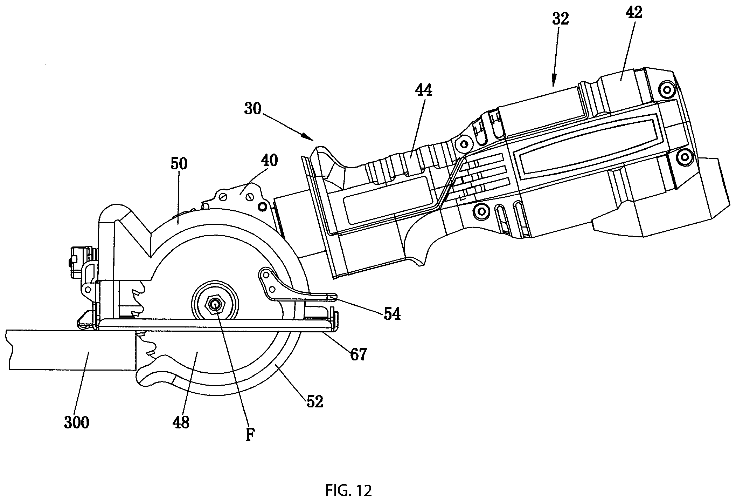

During translational cutting, as shown in FIG. 12, the motor is turned on by using the switch assembly; the base bottom portion 66 abuts against a surface of a workpiece 300, and the portable cutting tool 30 is pushed in a manner of being parallel to the surface of the workpiece 300. During pushing, the workpiece 300 pushes the lower guard 52 to further rotate around the axis F of the blade shaft 46, so that the blade 48 exposed from the lower guard 52 can process the workpiece 300. In this manner, cutting can be started from one end of the workpiece 300. By further pushing the portable cutting tool 30 forward to cut the workpiece, an elongated slot of a given length can be formed or the workpiece 300 can be severed.

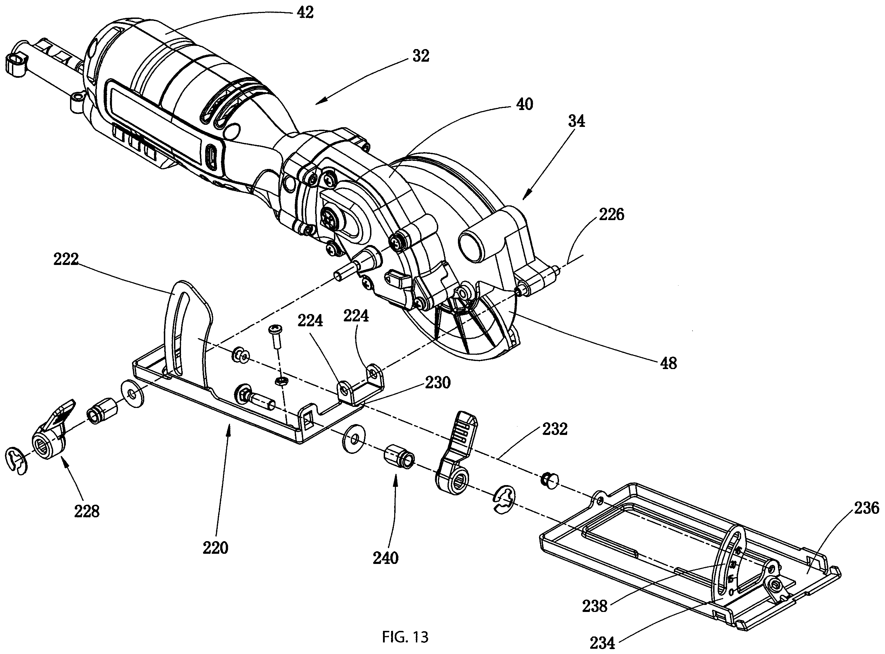

As shown in FIG. 13, a second embodiment of the present invention is substantially the same as the first embodiment, and the second embodiment also includes a depth adjusting mechanism used for adjusting a cutting depth. A supporting member 220 is provided with a depth adjusting holder 222 and symmetric mounting holes 224, so that the cutting unit 34 pivots around a first axis 226, thereby implementing adjustment of the cutting depth, and the cutting unit 34 is fixed by a locking device 228.

The difference lies in the angle adjusting structure used for changing a cutting angle. In this embodiment, the supporting member 220 is provided with a connecting hole 230, that is, a position of a second axis 232 is defined on the supporting member 220. An angle adjusting holder 234 is disposed on a base 236. The angle adjusting holder 234 is provided with a second guide slot 238. The second guide slot 238 is an arc-shaped guide slot, and the center of a circle corresponding to the arc where the second guide slot 238 is located is on the second axis 232.

In this manner, the cutting unit 34 pivots around the second axis 232, to implement adjustment of the cutting angle, and the cutting unit 34 is fixed by a locking device 240.

Certainly, when the mounting holes 224 that determine the first axis 226, the depth adjusting holder 222, and the connecting hole 230 that determines the second axis 232 are all provided on the supporting member 220, the cutting costs can also be reduced; moreover, the effect of enhancing the rigidity of the supporting member 220 and improving the cutting precision of the portable cutting tool can also be achieved.

By disposing the depth adjusting holder 222 and the second axis 232 separately on two sides of the front portion 40, the following effects can also be achieved: during depth adjustment or angle adjustment, seizing is avoided, and the cutting unit 34 does not shake and is relatively stable.

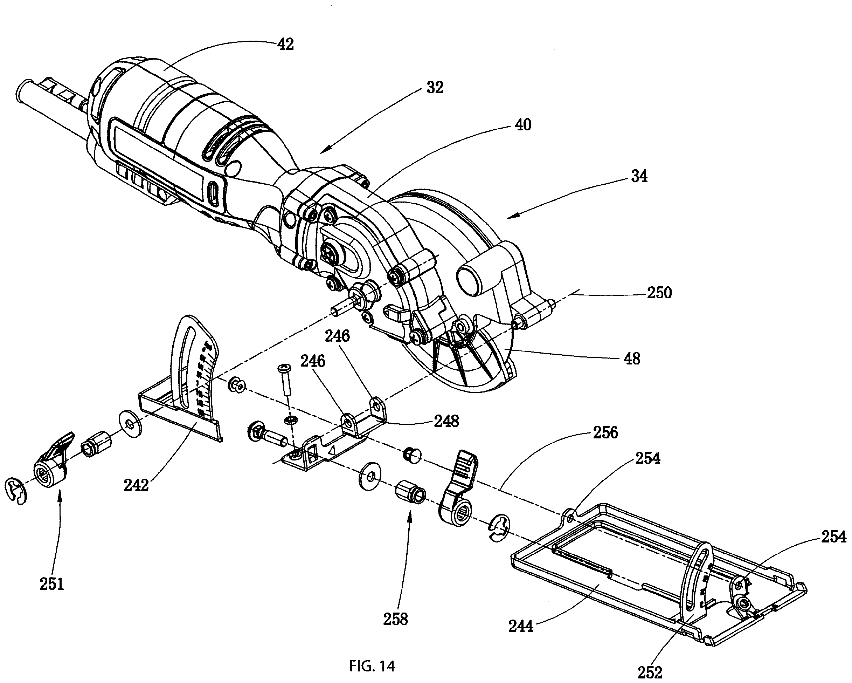

As shown in FIG. 14, an example not according to the present invention differs from the first embodiment in that: a depth adjusting holder 242 is fixedly disposed on a base 244, and a fixed mount 248 where a connecting hole 246 is located is also fixedly disposed on the base 244. In this manner, the cutting unit 34 pivots around a first axis 250 to implement adjustment of a cutting depth, and the cutting unit 34 is fixed by a locking device 251.

An angle adjusting holder 252 is fixedly disposed on the base 244, and mounting holes 254 are provided on the base 244. In this manner, the cutting unit 34 pivots around a second axis 256, to implement adjustment of the cutting angle, and the cutting unit 34 is fixed by a locking device 258.

The depth adjusting holder 244 and the second axis 256 are respectively disposed on two sides of the front portion 40; in this manner, the following effects can also be achieved: during depth adjustment or angle adjustment, seizing is avoided, and the cutting unit 34 does not shake and is relatively stable.

## Claims

1. A portable cutting tool (30), whereby the portable cutting tool comprises:
a blade (48);
a motor for driving the blade to rotate, wherein the motor comprises an output shaft;
a cutting unit (34) comprising a guard assembly; wherein the guard assembly comprises an upper guard (50) for receiving the blade and a lower guard (52),
wherein the lower guard is rotatable relative to the upper guard to expose the blade to cut a workpiece (200);
a base (36) connected to the upper guard, wherein the base is provided with a blade through-hole (70) for the blade to pass through, and further comprises a base bottom portion (66) for abutting against the workpiece and a front side wall (68a) extending upwards from the base bottom portion;
a housing (32), comprising a front portion (40) connected to the upper guard, a rear portion (42) extending longitudinally, and a gripping portion (44) disposed between the front portion and the rear portion, wherein the blade is rotatably disposed on the front portion by a blade shaft (46), the motor is disposed in the rear portion, and the blade shaft is perpendicular to the output shaft; and
a supporting member (80) connected to the base, the housing and the cutting unit movable around a first axis (76) relative to the base and the supporting member to change the cutting depth, and the supporting member comprising a depth adjusting holder (90), wherein the depth adjusting holder (90) is provided with a first guide slot (92) which is an arc-shaped guide slot, and the center of a circle corresponding to the arc where the first guide slot is located is on the first axis (76), wherein the upper guard and the arc-shaped guide slot are respectively disposed on two sides of the front portion.

2. The portable cutting tool (30) according to claim 1, wherein the upper guard (50) is rotatably connected to the supporting member (80) around the first axis (76) which is parallel with the blade shaft (46) to adjust a cutting depth, and the upper guard is movable between the minimum cutting position at which the blade (48) is not exposed out of the blade through-hole (70) and a maximum cutting position at which the blade is exposed out of the blade through-hole by a maximum depth.

3. The portable cutting tool (30) according to claim 2, wherein in the maximum cutting position, an angle of the longitudinal extending axis of the gripping portion (44) and base bottom portion (66) is not greater than 20 degrees.

4. The portable cutting tool (30) according to claim 2, wherein the supporting member (80) is pivotally connected to the base (36) around a second axis (98) which is parallel with the base bottom portion (66) to adjust a cutting angle, wherein the supporting member is provided with a second guide slot (104) which is an arc-shaped guide slot, and the center of a circle corresponding to the arc where the second guide slot is located is on the second axis.

5. The portable cutting tool (30) according to claim 1, wherein a friction pad (72) is disposed on the front side wall (68a) for contacting with the workpieces (200).

6. The portable cutting tool (30) according to claim 5, wherein the friction pad (72) comprises a curved surface (116) for contacting with the workpieces (200).

7. The portable cutting tool (30) according to claim 1, wherein the lower guard (52) is rotatably disposed on the blade shaft (46).

8. The portable cutting tool according to claim 7, wherein the lower guard (52) is rotatably disposed on the blade shaft (46) by a bearing (60).

## Patentansprüche

1. Tragbares Schneidwerkzeug (30), wobei das tragbare Schneidwerkzeug Folgendes umfasst:
eine Klinge (48);
einen Motor, um die Klinge zum Drehen anzutreiben, wobei der Motor eine Abtriebswelle umfasst;
eine Schneideinheit (34), umfassend eine Schutzanordnung; wobei die Schutzanordnung eine obere Schutzvorrichtung (50) zum Aufnehmen der Klinge und eine untere Schutzvorrichtung (52) umfasst, wobei die untere Schutzvorrichtung relativ zu der oberen Schutzvorrichtung drehbar ist, um die Klinge freizulegen, um ein Werkstück (200) zu schneiden;
eine Basis (36), die mit der oberen Schutzvorrichtung verbunden ist, wobei die Basis mit einem Klingendurchgangsloch (70) versehen ist, durch das die Klinge hindurchtreten kann, und ferner einen Basisbodenabschnitt (66) zum Anstoßen an das Werkstück und eine vordere Seitenwand (68a) umfasst, die sich von dem Basisbodenabschnitt nach oben erstreckt;
ein Gehäuse (32), umfassend einen vorderen Abschnitt (40), der mit der oberen Schutzvorrichtung verbunden ist, einen hinteren Abschnitt (42), der sich in Längsrichtung erstreckt, und einen Greifabschnitt (44), der zwischen dem vorderen Abschnitt und dem hinteren Abschnitt eingerichtet ist, wobei die Klinge drehbar an dem vorderen Abschnitt durch eine Klingenwelle (46) eingerichtet ist, wobei der Motor in dem hinteren Abschnitt eingerichtet ist und die Klingenwelle senkrecht zu der Abtriebswelle ist; und
ein mit der Basis, dem Gehäuse und der Schneideinheit verbundenes Stützelement (80), das um eine erste Achse (76) relativ zu der Basis und dem Stützelement beweglich ist, um die Schneidtiefe zu ändern, und wobei das Stützelement einen Tiefeneinstellhalter (90) umfasst, wobei der Tiefeneinstellhalter (90) mit einem ersten Führungsschlitz (92) versehen ist, der ein bogenförmiger Führungsschlitz ist, und der Mittelpunkt eines Kreises, der dem Bogen entspricht, in dem sich der erste Führungsschlitz befindet, auf der ersten Achse (76) liegt, wobei die obere Schutzvorrichtung und der bogenförmige Führungsschlitz jeweils an zwei Seiten des vorderen Abschnitts eingerichtet sind.

2. Tragbares Schneidwerkzeug (30) nach Anspruch 1, wobei die obere Schutzvorrichtung (50) drehbar mit dem Stützelement (80) um die erste Achse (76) verbunden ist, die parallel zu der Klingenwelle (46) liegt, um eine Schneidtiefe einzustellen, und die obere Schutzvorrichtung zwischen der minimalen Schneidposition, bei der die Klinge (48) nicht aus dem Klingendurchgangsloch (70) herausragt, und einer maximalen Schneidposition, bei der die Klinge aus dem Klingendurchgang um eine maximale Tiefe herausragt, drehbar beweglich ist.

3. Tragbares Schneidwerkzeug (30) nach Anspruch 2, wobei in der maximalen Schneidposition ein Winkel der sich in Längsrichtung erstreckenden Achse des Greifabschnitts (44) und des Basisbodenabschnitts (66) nicht größer als 20 Grad ist.

4. Tragbares Schneidwerkzeug (30) nach Anspruch 2, wobei das Stützelement (80) um eine zweite Achse (98), die parallel zu dem Basisbodenabschnitt (66) ist, schwenkbar mit der Basis (36) verbunden ist, um einen Schneidwinkel einzustellen, wobei das Stützelement mit einem zweiten Führungsschlitz (104) versehen ist, der ein bogenförmiger Führungsschlitz ist, und der Mittelpunkt eines Kreises, der dem Bogen entspricht, in dem sich der zweite Führungsschlitz befindet, auf der zweiten Achse liegt.

5. Tragbares Schneidwerkzeug (30) nach Anspruch 1, wobei ein Reibbelag (72) an der vorderen Seitenwand (68a) zum Inberührungbringen mit den Werkstücken (200) eingerichtet ist.

6. Tragbares Schneidwerkzeug (30) nach Anspruch 5, wobei der Reibbelag (72) eine gekrümmte Oberfläche (116) zum Inberührungbringen mit den Werkstücken (200) umfasst.

7. Tragbares Schneidwerkzeug (30) nach Anspruch 1, wobei die untere Schutzvorrichtung (52) drehbar auf der Klingenwelle (46) eingerichtet ist.

8. Tragbares Schneidwerkzeug nach Anspruch 7, wobei die untere Schutzvorrichtung (52) durch ein Lager (60) drehbar auf der Klingenwelle (46) eingerichtet ist.

## Revendications

1. Outil de coupe portable (30), l'outil de coupe portable comprenant :
une lame (48) ;
un moteur pour entraîner la rotation de la lame, le moteur comprenant un arbre de sortie ;
une unité de coupe (34) comprenant un ensemble de protection ; dans lequel l'ensemble de protection comprend une protection supérieure (50) destinée à recevoir la lame et une protection inférieure (52), la protection inférieure pouvant entrer en rotation par rapport à la protection supérieure pour exposer la lame afin de couper une pièce à usiner (200) ;
une base (36) reliée à la protection supérieure, la base étant pourvue d'un trou traversant de lame (70) pour permettre à la lame de passer à travers, et comprend en outre une partie inférieure de base (66) destinée à venir en butée contre la pièce à usiner et une paroi latérale avant (68a) s'étendant vers le haut depuis la partie inférieure de la base ;
un boîtier (32) comprenant une partie avant (40) reliée à la protection supérieure, une partie arrière (42) s'étendant longitudinalement et une partie de préhension (44) disposée entre la partie avant et la partie arrière, dans lequel la lame est disposée en rotation sur la partie avant par un arbre de lame (46), le moteur est disposé dans la partie arrière et l'arbre de lame est perpendiculaire à l'arbre de sortie ; et
un élément de support (80) relié à la base, au boîtier et à l'unité de coupe mobile autour d'un premier axe (76) par rapport à la base et à l'élément de support pour modifier la profondeur de coupe, et l'élément de support comprenant un support de réglage de profondeur (90), dans lequel le support de réglage de profondeur (90) est pourvu d'une première fente de guidage (92) qui est une fente de guidage en forme d'arc, et le centre d'un cercle correspondant à l'arc où se trouve la première fente de guidage se trouve sur le premier axe (76), dans lequel la protection supérieure et la fente de guidage en forme d'arc sont disposées respectivement sur les deux côtés de la partie avant.

2. Outil de coupe portable (30) selon la revendication 1, dans lequel la protection supérieure (50) est reliée en rotation à l'élément de support (80) autour du premier axe (76) qui est parallèle à l'arbre de lame (46) pour régler une profondeur de coupe, et la protection supérieure est mobile entre la position de coupe minimale à laquelle la lame (48) n'est pas exposée en dehors du trou traversant de la lame (70) et une position de coupe maximale à laquelle la lame est exposée en dehors du trou traversant de la lame par une profondeur maximale.

3. Outil de coupe portable (30) selon la revendication 2, dans lequel, dans la position de coupe maximale, un angle de l'axe longitudinal s'étendant de la partie de préhension (44) et de la partie inférieure de base (66) n'est pas supérieur à 20 degrés.

4. Outil de coupe portable (30) selon la revendication 2, dans lequel l'élément de support (80) est relié de manière pivotante à la base (36) autour d'un second axe (98) qui est parallèle à la partie inférieure de la base (66) pour régler un angle de coupe, dans lequel l'élément de support est pourvu d'une seconde fente de guidage (104) qui est une fente de guidage en forme d'arc, et le centre d'un cercle correspondant à l'arc où se trouve la seconde fente de guidage est sur le second axe.

5. Outil de coupe portable (30) selon la revendication 1, dans lequel un patin de friction (72) est disposé sur la paroi latérale avant (68a) pour entrer en contact avec les pièces à usiner (200).

6. Outil de coupe portable (30) selon la revendication 5, dans lequel le patin de friction (72) comprend une surface incurvée (116) pour entrer en contact avec les pièces à usiner (200).

7. Outil de coupe portable (30) selon la revendication 1, dans lequel la protection inférieure (52) est disposée en rotation sur l'arbre de lame (46).

8. Outil de coupe portable selon la revendication 7, dans lequel la protection inférieure (52) est disposée en rotation sur l'arbre de lame (46) par un palier (60).
